# EUROPEAN PATENT SPECIFICATION

(11) **EP 2 982 583 B1**
(45) Date of publication and mention of the grant of the patent: **24.04.2019**
(21) Application number: 15179286.8
(22) Date of filing: 31.07.2015
(51) Int. Cl.: B62J 17/04, B62J 99/00

(54) **WINDSHIELD DEVICE**
WINDSCHUTZSCHEIBENVORRICHTUNG
DISPOSITIF DE PARE-BRISE

(30) Priority: 07.08.2014 JP 2014161573
(43) Date of publication of application: 10.02.2016
(73) Proprietor: Kawasaki Jukogyo Kabushiki Kaisha, Kobe-shi, Hyogo 650-8670 (JP)
(72) Inventor: Tamura, Hiroshi, Hyogo, 673-8666 (JP)
(74) Representative: Hoffmann Eitle

(56) References cited:
- EP-A1- 2 468 613
- US-A1- 2002 131 606

## Description

### [Technical Field]

The present invention relates to a windshield device for a vehicle such as a motorcycle.

### [Background Art]

Motorcycle accessories, particularly a GPS, have been conventionally provided near handlebars in consideration of driver's visibility and operability. As disclosed in JP 2004-237762 A, an accessory mount portion mounted with an accessory has been attached to an upper bracket, a cowl stay, or the like, to which handlebars of a motorcycle is fixed.

### [Citation List]

### [Patent Literature]

[Patent Literature 1]
JP 2004-237762 A

### [Summary of Invention]

### [Technical Problem]

The configuration according to JP 2004-237762 A, however, requires provision of the accessory mount portion mounted with an accessory. The accessory mount portion is shaped to extend from the upper bracket, the cowl stay, or the like. This configuration complicates a vehicle body front portion of the motorcycle.

In view of the problem mentioned above, an object of the present invention is to provide a windshield device that simplifies a vehicle body front portion and improves' outer appearance.

US 2002/0131606 A1 discloses features falling under the preamble of claim 1.

### [Solution to Problem]

The present invention provides a windshield device for a vehicle having the features of claim 1.

The accessory mount portion is provided at the shield stay in this configuration. The accessory mount portion needs not be provided separately and this simplifies the structure of the vehicle. The accessory mount portion is disposed behind the windshield, so that the accessory mount portion and the accessory mounted to the accessory mount portion are hard to be found from ahead of the vehicle. This improves outer appearance of the vehicle. Furthermore, the windshield protects the accessory from a foreign matter flying from ahead along with traveling wind.

### [Advantageous Effects of Invention]

In summary, the present invention provides a windshield device that simplifies a vehicle body front portion and improves outer appearance.

### [Brief Description of Drawings]

Fig. 1 is a rear perspective view of a front portion of a motorcycle including a windshield device according to an embodiment of the present invention.
Fig. 2 is a rear view of the front portion of the motorcycle depicted in Fig. 1.
Fig. 3 is a rear perspective view of the front portion of the motorcycle depicted in Fig. 1, in a state where a front cowl, a meter, steering handlebars, and the like are removed.
Fig. 4 is a rear perspective view of the front portion of the motorcycle depicted in Fig. 1, in a state where an accessory is removed.
Fig. 5 is a front view of a shield stay.
Fig. 6 is a top view of the shield stay.
Fig. 7 is a view along arrow VII indicated in Fig. 6.
Fig. 8 is a view along arrow VIII indicated in Fig. 6.
Fig. 9 is a front view depicting a state where an accessory mount portion is attached to the shield stay.

### [Description of Embodiments]

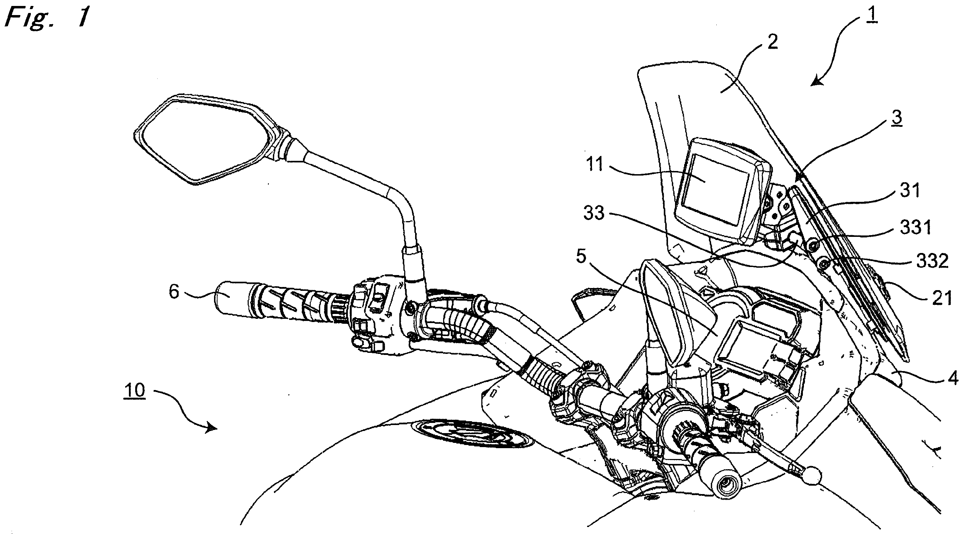

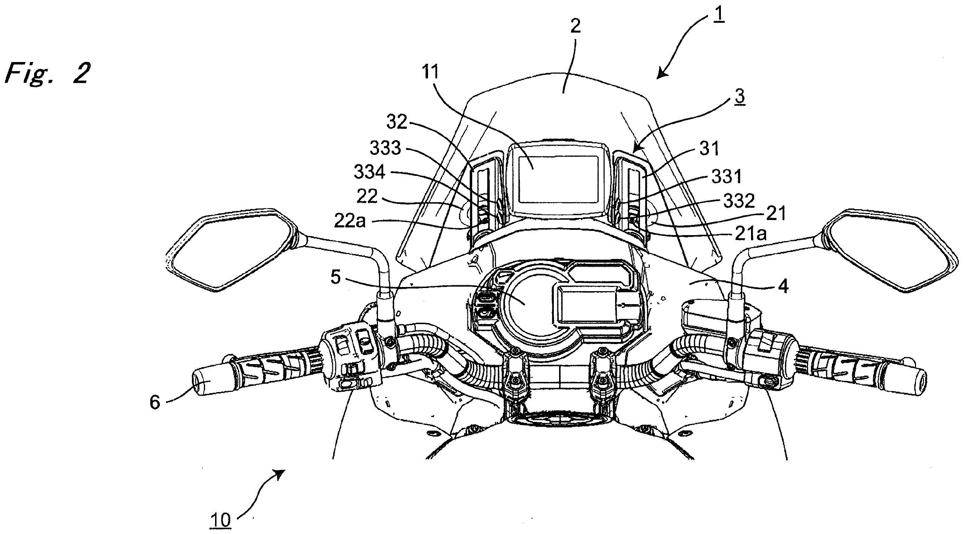

Fig. 1 is a rear perspective view of a front portion of a motorcycle including a windshield device according to an embodiment of the present invention. Fig. 2 is a rear view of the front portion of the motorcycle depicted in Fig. 1. The idea of directions to be mentioned in the present embodiment is assumed to be the same as the idea of directions viewed from a driver of the motorcycle.

As depicted in Figs. 1 and 2, a windshield device 1 configured to weaken wind pressure to the driver includes a windshield 2 and a shield stay 3 supporting the windshield 2. The windshield device 1 is disposed above a front cowl 4 that covers a front portion of a motorcycle 10. The front cowl 4 is disposed ahead of a meter 5 configured to display traveling speed and the like of the motorcycle 10. The meter 5 is disposed ahead of steering handlebars 6 that extend rightward and leftward, respectively, and are used for steering the motorcycle 10.

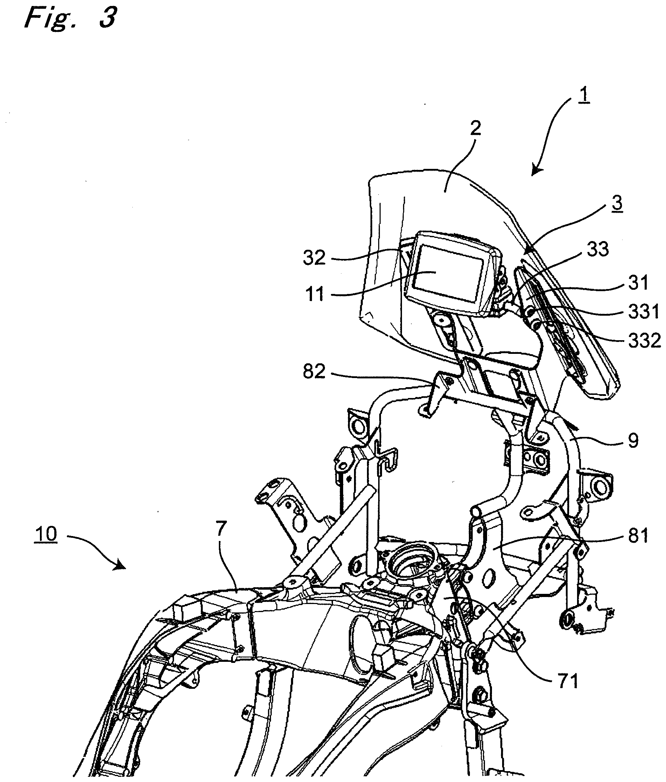

Fig. 3 is a rear perspective view of the front portion of the motorcycle 10 depicted in Fig. 1, in a state where the front cowl 4, the meter 5, the steering handlebars 6, and the like are removed. As depicted in Fig. 3, the motorcycle 10 includes a vehicle frame 7 that is provided, at the front end, with a head tube 71 rotatably supporting a steering shaft (not depicted). Attached to the head tube 71 is a supporting member 9 that extends upward, rightward, and leftward with a bracket 81 being interposed therebetween. The shield stay 3 is attached to the supporting member 9 with a bracket 82 being interposed therebetween.

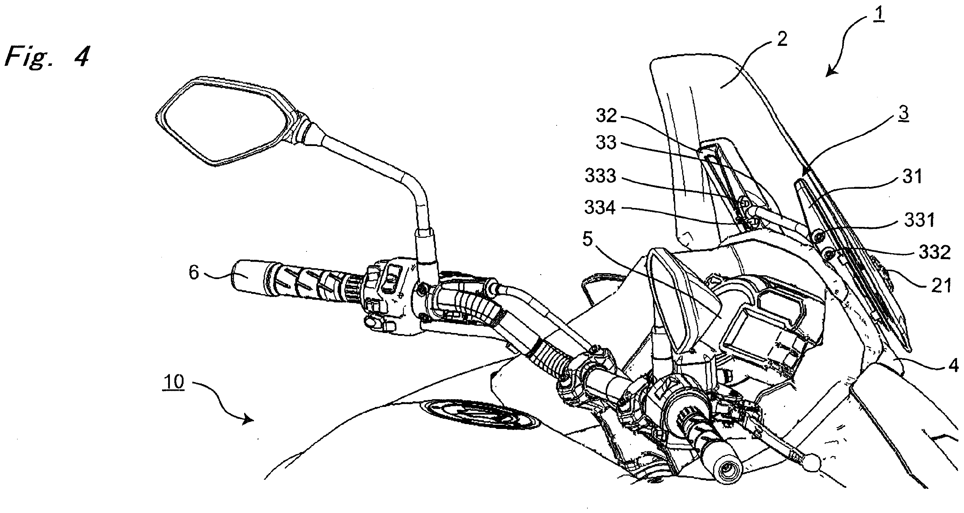

Fig. 4 is a rear perspective view of the front portion of the motorcycle 10 depicted in Fig. 1, in a state where a vehicle accessory 11 is removed. As depicted in Figs. 1 to 4, the shield stay 3 includes a pair of pillars 31 and 32 provided therebetween with a space in the vehicle width direction. The pillars 31 and 32 are each slanted downward toward its front end. The shield stay 3 is provided, behind the windshield 2, with an accessory mount portion 33 mounted with the accessory 11. The accessory 11 can be a display device, more specifically, a display device for a navigation system adopting a GPS.

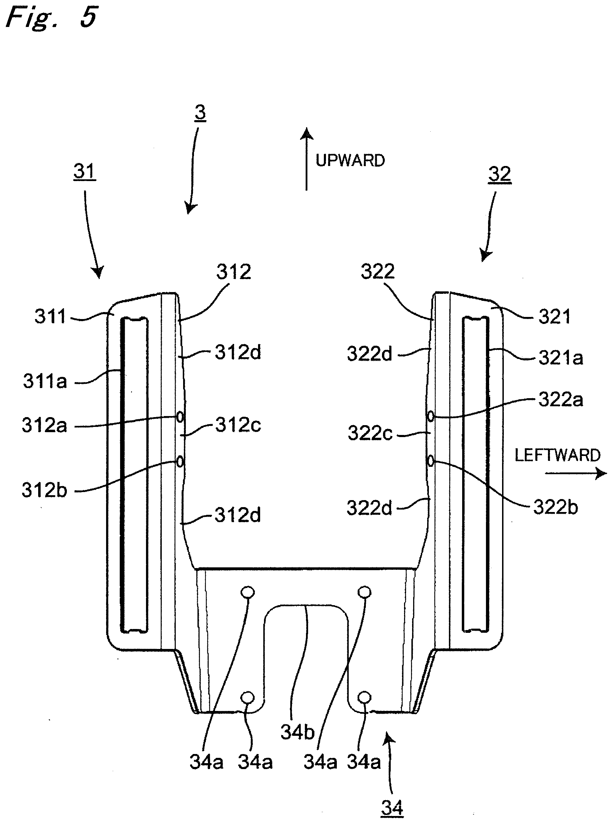

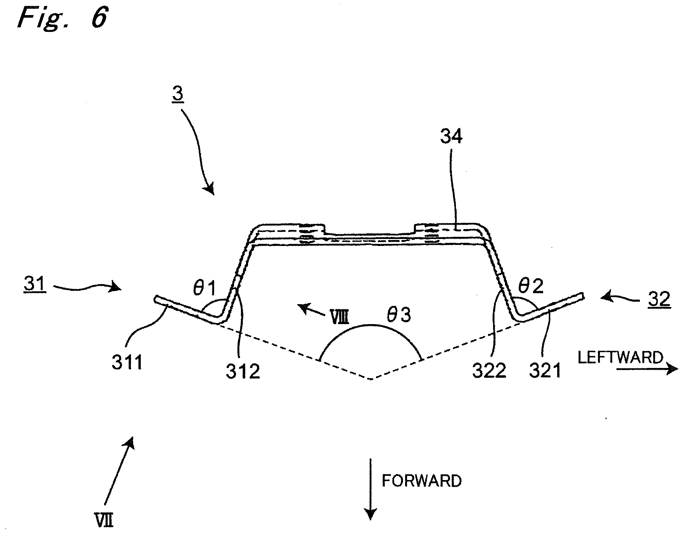

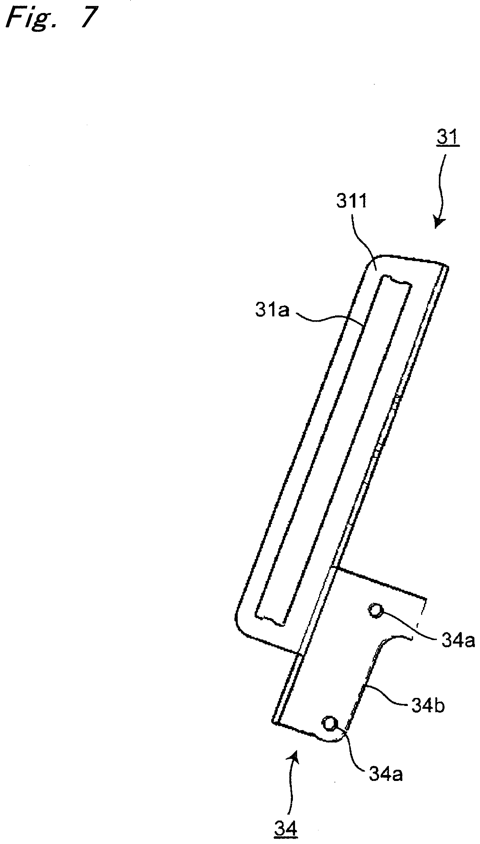

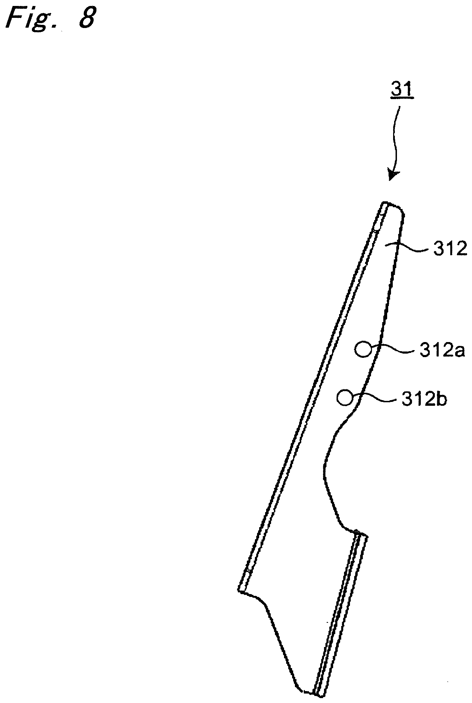

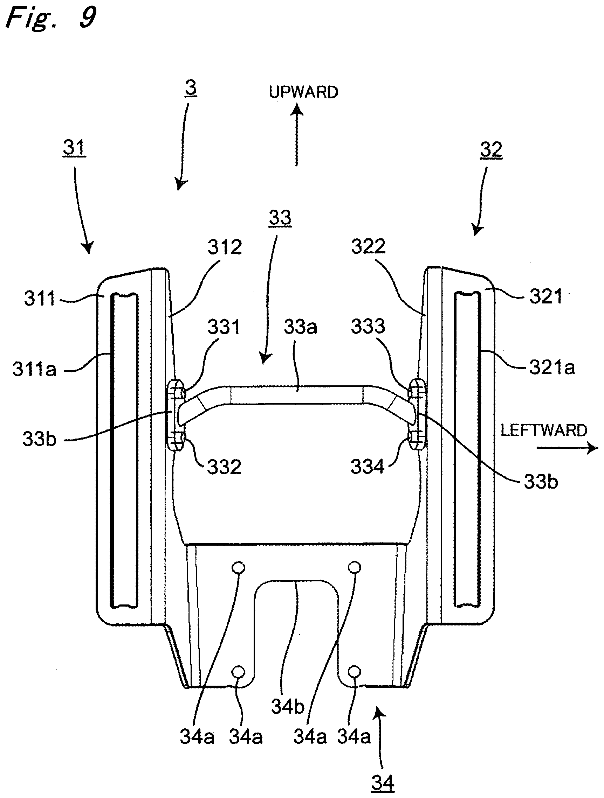

Fig. 5 is a front view of the shield stay 3, whereas Fig. 6 is a top view of the shield stay 3. Fig. 7 is a view along arrow VII indicated in Fig. 6, whereas Fig. 8 is a view along arrow VIII indicated in Fig. 6. Fig. 9 is a front view depicting a state where the accessory mount portion 33 is attached to the shield stay 3. As depicted in Figs. 5 to 9, the pillar 31 has a shield attachment surface 311 provided with the windshield 2, and an accessory mount portion attachment surface 312 provided with the accessory mount portion 33. The shield attachment surface 311 and the accessory mount portion attachment surface 312 are not flush with each other but cross each other. Specifically, as depicted particularly in Fig. 6, the shield attachment surface 311 and the accessory mount portion attachment surface 312 form an angle θ1 that has predetermined degrees not equal to 180 degrees. Although the angle θ1 can be not less than 90 degrees or can be less than 90 degrees, the angle θ1 is preferred to be less than 90 degrees. The shield attachment surface 311 is provided with a long hole 311a extending in the up-down direction.

The accessory mount portion attachment surface 312 has a contact portion 312c in contact with the accessory mount portion 33 and a peripheral portion 312d. The contact portion 312c is larger in width than the peripheral portion 312d, and is provided with holes 312a and 312b used for attaching the accessory mount portion 33. The holes 312a and 312b are disposed spaced apart from the shield attachment surface 311 in the anteroposterior direction as well as in the vehicle width direction. As depicted in Fig. 9, the accessory mount portion 33 is fastened to the accessory mount portion attachment surface 312 when hexagon socket head bolts 331 and 332 are inserted through holes provided at the ends in the vehicle width direction of the accessory mount portion 33 as well as through the holes 312a and 312b and are fastened. The peripheral portion 312d according to the present embodiment has predetermined area. Alternatively, the peripheral portion 312d may not have area so that the contact portion 312c corresponds to the entirety of the accessory mount portion attachment surface.

The pillar 32 is symmetrical with the pillar 31 in the transverse direction, and is basically configured similarly to the pillar 31. Accordingly, the pillar 32 has a shield attachment surface 321, an accessory mount portion attachment surface 322, an angle θ2, a long hole 321a, a hole 322a, a hole 322b, a contact portion 322c, and a peripheral portion 322d, which correspond to the shield attachment surface 311, the accessory mount portion attachment surface 312, the angle θ1, the long hole 311a, the hole 312a, the hole 312b, the contact portion 312c, and the peripheral portion 312d of the pillar 31, respectively. A clamp 21 configured to fasten the shield attachment surface 311 and the windshield 2 from ahead and from behind has a shaft 21a shifting in the long hole 311a whereas a clamp 22 configured to fasten the shield attachment surface 321 and the windshield 2 from ahead and from behind has a shaft 22a shifting in the long hole 321a. The windshield 2 is thus positionally adjusted in the up-down direction relatively to the shield stay 3. The shield attachment surface 311 and the shield attachment surface 321 are not flush with each other but form an angle θ3 that is less than 180 degrees.

As depicted in Fig. 9, the accessory mount portion 33 is fastened to the accessory mount portion attachment surface 322 when hexagon socket head bolts 333 and 334 are inserted through holes provided at the ends in the vehicle width direction of the accessory mount portion 33 as well as through the holes 322a and 322b and are fastened. The accessory mount portion 33 is thus attachable to and detachable from the shield stay 3 by the bolts 331 to 334.

As depicted in Fig. 6, the accessory mount portion attachment surface 312 and the accessory mount portion attachment surface 322 have a distance therebetween gradually reduced toward their rear ends. As depicted in Figs. 5, 6, and 9, a coupling member 34 couples the lower portion of the accessory mount portion attachment surface 312 of the pillar 31 and the lower portion of the accessory mount portion attachment surface 322 of the pillar 32, so that the pillar 31, the pillar 32, and the coupling member 34 are provided integrally. The pillar 31 and the pillar 32 are each slanted downward toward its front end, whereas the coupling member 34 extends in the up-down direction so as to be substantially perpendicular to a horizontal plane. The coupling member 34 is provided with a plurality of holes 34a. The shield stay 3 is attached to the bracket 82 when the holes 34a and the bracket 82 are fastened to each other by bolts. The coupling member 34 is provided, at the lower end in the center in the vehicle width direction, with an upward cut-away section 34b.

As depicted particularly in Fig. 9, the accessory mount portion 33 is provided, in the center in the vehicle width direction, with an accessory fixing portion 33a mounted with the accessory 11. The accessory fixing portion 33a is disposed above attached portions 33b that are attached to the shield stay 3. The attached portions 33b according to the present embodiment are disposed respectively at the ends in the vehicle width direction of the accessory mount portion 33. The accessory mount portion 33 is shaped such that the accessory fixing portion 33a at an intermediate position in the vehicle width direction projects upward from the attached portions 33b at the ends in the vehicle width direction. The accessory mount portion 33 has a columnar sectional shape and a U shape as a whole, for example.

The present embodiment achieves the following effects.

The accessory mount portion 33 is provided at the shield stay 3. The accessory mount portion needs not be provided separately and this simplifies the structure of the motorcycle 10.

The accessory mount portion 33 is disposed behind the windshield 2, so that the accessory mount portion 33 and the accessory 11 mounted to the accessory mount portion 33 are hard to be found from ahead of the motorcycle 10. This improves outer appearance of the motorcycle 10. Furthermore, the windshield 2 protects the accessory 11 from a foreign matter flying from ahead along with traveling wind.

The shield stay 3 includes the pair of pillars 31 and 32 provided therebetween with a space in the vehicle width direction, and the pillars 31 and 32 are each slanted downward toward the front end. These pillars have less influence on the field of view of a driver as compared to a shield stay including pillars extending in the vehicle width direction.

The accessory mount portion 33 is attachable to and detachable from the pair of pillars 31 and 32. The accessory mount portion 33 is prevented from affecting the field of view of the driver by being detached when the accessory 11 is not required.

The shield attachment surfaces 311 and 321 and the accessory mount portion attachment surfaces 312 and 322 are not flush with each other, but cross each other, respectively. When the accessory mount portion 33 is attached to the accessory mount portion attachment surfaces 312 and 322, the accessory mount portion 33 is accessed in a different direction from the direction of attaching the windshield 2 and the accessory mount portion 33 is thus attached easily. Particularly when the angles θ1 and θ2 are set to be less than 90 degrees to increase an angle between the direction of attaching the windshield 2 and the direction of attaching the accessory mount portion 33, the accessory mount portion 33 is attached in a direction less intervening in the windshield 2. Furthermore, the accessory mount portion attachment surfaces 312 and 322 less stand out as compared to a case where the accessory mount portion attachment surfaces 312 and 322 are flush with the shield attachment surfaces 311 and 321, respectively.

The accessory mount portion 33 is attached to the accessory mount portion attachment surfaces 312 and 322 by the hexagon socket head bolts 331 to 334. As compared to a case where ordinary bolts are used, the bolts 331 to 334 are reduced in projection amount at the head portions. The bolts 331 to 334 are thus easily prevented from intervening in the clamps 21 and 22 configured to fasten the windshield 2 to the shield stay 3.

The distance between the pair of accessory mount portion attachment surfaces 312 and 322 is gradually reduced toward the rear ends. In other words, the accessory mount portion attachment surfaces 312 and 322 are disposed in a substantially V shape from the front ends toward the rear ends in a top view. The accessory mount portion 33 is easily adjusted in position in the anteroposterior direction relatively to the pillars 31 and 32, and the accessory mount portion 33 is easily fastened by the bolts to the holes 312a, 312b, 322a, and 322b in the accessory mount portion attachment surfaces 312 and 322.

The accessory mount portion 33 is attached to the accessory mount portion attachment surfaces 312 and 322 at two positions at each of the ends in the vehicle width direction, in other words, are fixed at the two positions at each of the ends in the vehicle width direction. The accessory mount portion 33 is thus reliably prevented from turning.

In the accessory mount portion attachment surfaces 312 and 322, the contact portions 312c and 322c in contact with the accessory mount portion 33 are wider than the peripheral portions 312d and 322d, respectively. The accessory mount portion attachment surfaces 312 and 322 are more easily provided with seats for the attached bolts 331 to 334. The pillars 31 and 32 are thus suppressed from increasing in weight as well as are improved in support rigidity.

The accessory mount portion attachment surfaces 312 and 322 include the contact portions 312c and 322c and are larger than the contact portions 312c and 322c, respectively. The accessory mount portion attachment surfaces 312 and 322 extend in the up-down direction from the contact portions 312c and 322c so as to correspond to the lengths of the shield attachment surfaces 311 and 321 in the up-down direction, respectively. The pillars 31 and 32 are thus improved in strength.

The accessory fixing portion 33a is disposed above the attached portions 33b. The accessory 11 mounted to the accessory mount portion 33 is disposed close to the field of view of a driver who can thus easily view the accessory 11. The driver is accordingly more likely to recognize notified information (light, sound, or the like) from the accessory 11. Regarding disposition of the accessory fixing portion 33a relatively to the attached portions 33b, the accessory fixing portion 33a can be disposed above and/or behind the attached portions 33b instead of above thereof so as to achieve the advantageous effect.

The windshield 2 is attached to the shield stay 3 so as to be positionally adjustable in the up-down direction. The accessory mount portion 33 is thus provided at the shield stay 3 of the windshield 2 that is positionally adjustable in the up-down direction. In this configuration, the position of the accessory 11 relatively to the vehicle body does no change even if the windshield 2 is positionally adjusted. The accessory 11 can be thus kept in position.

The pair of pillars 31 and 32 is coupled to each other at the lower ends by the coupling member 34. This configuration prevents change in relative position between the pillar 31 and the pillar 32 of the shield stay 3 by attaching the accessory mount portion 33. The windshield 2 is thus smoothly adjusted in position. The pillar 31, the pillar 32, and the coupling member 34 are provided integrally. This configuration improves strength of the shield stay 3.

The accessory mount portion 33 has the columnar sectional shape to easily change in angle of the accessory 11 mounted to the accessory mount portion 33. The accessory mount portion 33 has the U shape as a whole to improve rigidity of the accessory mount portion 33.

The accessory mount portion 33 is bridged between the pair of pillars 31 and 32 to connect the pillar 31 and the pillar 32. The attached portions 33b at the ends in the vehicle width direction of the accessory mount portion 33 are attached to the accessory mount portion attachment surfaces 312 and 322, respectively. The accessory mount portion 33 thus improves strength of connection between the pillars 31 and 32. Furthermore, the pair of pillars 31 and 32 suppresses vibration of the accessory 11 mounted to the accessory mount portion 33.

The accessory 11 according to the embodiment described above is a display device for a navigation system adopting a GPS. The accessory 11 is not limited thereto but can be an indicator, a personal digital assistant, a live camera, audio equipment, an ETC antenna, or the like. The windshield 2 is attached to the shield stay 3 so as to be positionally adjustable in the up-down direction. Alternatively, the windshield 2 can be adjustable in angle, instead of being positionally adjustable in the up-down direction. Still alternatively, the windshield 2 can be fixed to the shield stay 3 so as not to be positionally adjustable.

The accessory mount portion 33 according to the above embodiment is detachably bridged between the pillars 31 and 32. The accessory mount portion 33 has only to be attached to the shield stay 3, and can be attached to only one of the pillars. The accessory mount portion 33 can be provided as a metal plate component or the like and have any appropriate shape instead of the columnar sectional shape so as to allow the accessory 11 to be mounted thereto. The accessory mount portion 33 can have a linear shape as a whole, instead of the U shape.

According to the above embodiment, the accessory fixing portion 33a is disposed in the center in the vehicle width direction of the accessory mount portion 33 and the attached portions 33b are disposed respectively at the ends in the vehicle width direction of the accessory mount portion 33. The present invention is not limited to this configuration, but the accessory fixing portion can be disposed at an end (not necessarily in the vehicle width direction) of the accessory mount portion 33 and the attached portions can be disposed at an intermediate position in the vehicle width direction of the accessory mount portion 33.

Although the above embodiment refers to the motorcycle, the present invention is applicable to any vehicle other than the motorcycle, including a windshield disposed ahead of a driver. The present invention is preferably applicable to a small planing boat, a buggy, and a saddle type vehicle such as a vehicle configured to travel on unconditioned grounds. The present invention is also preferably applicable to a vehicle including handlebars and a windshield disposed ahead of the handlebars.

The present invention should not be limited to the configurations exemplified in the above embodiment, but can include various modifications possibly devised by those skilled in the art without departing from the features recited in the following claims.

The present invention provides a windshield device that simplifies a vehicle body front portion and improves outer appearance, and is thus highly industrially useful.

## Claims

1. A windshield device for a vehicle, the windshield device comprising:
a windshield (2); and
a shield stay (3) supporting the windshield (2); wherein
the shield stay (3) includes a pair of pillars (31, 32) provided therebetween with a space in a vehicle width direction,
the shield stay (3) is provided, behind the windshield, with an accessory mount portion (33) mounted with a vehicle accessory, and
**characterized in that**
the pillars (31, 32) are each slanted downward toward a front end thereof, and that
the shield stay (3) is attached to a supporting member (9) which is attached to a head tube (71).

2. The windshield device according to claim 1, wherein the accessory mount portion (33) is detachably provided between the pair of pillars (31, 32).

3. The windshield device according to claim 1 or 2, wherein
the pillars (31, 32) each include a shield attachment surface (311) provided with the windshield, and an accessory mount portion attachment surface (312) provided with the accessory mount portion (33), and
the shield attachment surface and the accessory mount portion attachment surface cross each other.

4. The windshield device according to claim 3, wherein the pair of accessory mount portion attachment surfaces (312) has a distance therebetween gradually reduced toward rear ends thereof.

5. The windshield device according to claim 3 or 4, wherein
the accessory mount portion attachment surface (312) has a contact portion that is in contact with the accessory mount portion and is larger in width than a peripheral portion thereof, and
the accessory mount portion is fastened to the contact portion by a fastener.

6. The windshield device according to any one of claims 1 to 5, wherein
the accessory mount portion (33) has an accessory fixing portion mounted with an accessory and an attached portion attached to the shield stay, and
the accessory fixing portion is disposed above and/or behind the attached portion.

7. The windshield device according to any one of claims 1 to 6, wherein the windshield (2) is attached to the shield stay to be positionally adjustable in an up-down direction.

8. The windshield device according to claim 7, wherein the pair of pillars (31, 32) is coupled to each other at lower ends by a coupling member.

9. The windshield device according to any one of claims 1 to 8, wherein the windshield is attached to the shield stay to be positionally adjustable in an up-down direction and the shield stay is attached to a bracket by fastening members which are different from fastening members fastening the windshield.

10. The windshield device according to any one of claims 1 to 9, wherein the accessory mount portion is fastened to an accessory mount portion attachment surface by fastening members in the vehicle width direction which are different from fastening members fastening the windshield and the shield stay.

11. The windshield device according to claim 6, wherein the attached portions are disposed respectively at the ends in the vehicle width direction of the accessory mount portion which has a columnar sectional shape and a U shape as a whole.

12. The windshield device according to claim 10, wherein the accessory mount portion is provided to connect a pair of pillars and the attached portion are placed at the ends in the vehicle width direction of the accessory mount portion.

## Patentansprüche

1. Windschutzscheibenvorrichtung für ein Fahrzeug, wobei die Windschutzscheibenvorrichtung umfasst:
eine Windschutzscheibe (2); und
eine Schutzscheibenstrebe (3), die die Windschutzscheibe (2) stützt; wobei
die Schutzscheibenstrebe (3) ein Paar von Säulen (31, 32) beinhaltet, die dazwischen mit einem Abstand in einer Fahrzeugbreitenrichtung bereitgestellt sind,
die Schutzscheibenstrebe (3) hinter der Windschutzscheibe mit einem Zubehörmontageabschnitt (33) bereitgestellt ist, der mit einem Fahrzeugzubehör montiert ist, und
**dadurch gekennzeichnet, dass**
die Säulen (31, 32) jeweils abwärts in Richtung eines vorderen Endes davon geneigt sind, und dass
die Schutzscheibenstrebe (3) an einem Stützelement (9) angebracht ist, das an einem Steuerrohr (71) angebracht ist.

2. Windschutzscheibenvorrichtung nach Anspruch 1, wobei der Zubehörmontageabschnitt (33) abnehmbar zwischen dem Paar von Säulen (31, 32) bereitgestellt ist.

3. Windschutzscheibenvorrichtung nach Anspruch 1 oder 2, wobei
die Säulen (31, 32) jeweils eine Schutzscheibenanbringungsfläche (311), die mit der Windschutzscheibe bereitgestellt ist, und eine Zubehörmontageabschnittanbringungsfläche (312), die mit dem Zubehörmontageabschnitt (33) bereitgestellt ist, beinhalten, und
die Schutzscheibenanbringungsfläche und die Zubehörmontageabschnittanbringungsfläche einander kreuzen.

4. Windschutzscheibenvorrichtung nach Anspruch 3, wobei das Paar von Zubehörmontageabschnittanbringungsflächen (312) einen Abstand dazwischen aufweist, der in Richtung von hinteren Enden davon allmählich abnimmt.

5. Windschutzscheibenvorrichtung nach Anspruch 3 oder 4, wobei
die Zubehörmontageabschnittanbringungsfläche (312) einen Kontaktabschnitt aufweist, der in Kontakt mit dem Zubehörmontageabschnitt ist und größer in der Breite ist als ein Umfangsabschnitt davon, und
der Zubehörmontageabschnitt an dem Kontaktabschnitt durch ein Befestigungsteil befestigt ist.

6. Windschutzscheibenvorrichtung nach einem der Ansprüche 1 bis 5, wobei
der Zubehörmontageabschnitt (33) einen Zubehörfixierabschnitt, der mit einem Zubehör montiert ist, und einen angebrachten Abschnitt, der an der Schutzscheibenstrebe angebracht ist, aufweist, und
der Zubehörfixierabschnitt über und/oder hinter dem angebrachten Abschnitt angeordnet ist.

7. Windschutzscheibenvorrichtung nach einem der Ansprüche 1 bis 6, wobei die Windschutzscheibe (2) an der Schutzscheibenstrebe angebracht ist, um positionsmäßig in einer Aufwärts-Abwärtsrichtung einstellbar zu sein.

8. Windschutzscheibenvorrichtung nach Anspruch 7, wobei das Paar von Säulen (31, 32) an unteren Enden durch ein Kopplungselement aneinander gekoppelt ist.

9. Windschutzscheibenvorrichtung nach einem der Ansprüche 1 bis 8, wobei die Windschutzscheibe an der Schutzscheibenstrebe angebracht ist, um positionsmäßig in einer Aufwärts-Abwärtsrichtung einstellbar zu sein, und die Schutzscheibenstrebe an einer Klammer durch Befestigungselemente angebracht ist, die unterschiedlich von Befestigungselementen zum Befestigen der Windschutzscheibe sind.

10. Windschutzscheibenvorrichtung nach einem der Ansprüche 1 bis 9, wobei der Zubehörmontageabschnitt an einer Zubehörmontageabschnittanbringungsfläche durch Befestigungselemente in der Fahrzeugbreitenrichtung befestigt ist, die unterschiedlich von Befestigungselementen zum Befestigen der Windschutzscheibe und der Schutzscheibenstrebe sind.

11. Windschutzscheibenvorrichtung nach Anspruch 6, wobei die angebrachten Abschnitte jeweils an den Enden in der Fahrzeugbreitenrichtung des Zubehörmontageabschnitts angeordnet sind, der eine säulenartige Querschnittsform und eine U-Form als ein Ganzes aufweist.

12. Windschutzscheibenvorrichtung nach Anspruch 10, wobei der Zubehörmontageabschnitt bereitgestellt ist, um ein Paar von Säulen zu verbinden, und der angebrachte Abschnitt an den Enden in der Fahrzeugbreitenrichtung des Zubehörmontageabschnitts platziert sind.

## Revendications

1. Dispositif de pare-brise pour un véhicule, le dispositif de pare-brise comprenant :
un pare-brise (2) ; et
un support d'écran (3) supportant le pare-brise (2) ; dans lequel
le support d'écran (3) inclut une paire de montants (31, 32) pourvus entre eux d'un espace dans le sens de la largeur du véhicule,
le support d'écran (3) est pourvu, derrière le pare-brise, d'une partie de montage d'accessoire (33) montée avec un accessoire de véhicule et
**caractérisé en ce que**
les montants (31, 32) sont inclinés chacun vers le bas en direction de leur extrémité avant, et
le support d'écran (3) est attaché à un élément de support (9) qui est attaché à un tube de tête (71).

2. Dispositif de pare-brise selon la revendication 1, dans lequel la partie de montage d'accessoire (33) est pourvue de manière détachable entre la paire de montants (31, 32).

3. Dispositif de pare-brise selon la revendication 1 ou 2, dans lequel
les montants (31, 32) incluent chacun une surface d'attache d'écran (311) pourvue du pare-brise et une surface d'attache de partie de montage d'accessoire (312) pourvue de la partie de montage d'accessoire (33) et
la surface d'attache d'écran et la surface d'attache de la partie de montage d'accessoire se croisent l'une l'autre.

4. Dispositif de pare-brise selon la revendication 3, dans lequel la paire de surfaces d'attache de partie de montage d'accessoire (312) a une distance les séparant qui se réduit graduellement vers leurs extrémités arrière.

5. Dispositif de pare-brise selon la revendication 3 ou 4, dans lequel
la surface d'attache de partie de montage d'accessoire (312) a une partie de contact qui est en contact avec la partie de montage d'accessoire et a une largeur plus grande que sa partie périphérique et
la partie d'attache d'accessoire est fixée à la partie de contact par une fixation.

6. Dispositif de pare-brise selon l'une quelconque des revendications 1 à 5, dans lequel
la partie de montage d'accessoire (33) a une partie de fixation d'accessoire montée avec un accessoire et une partie attachée au support d'écran et
la partie de fixation d'accessoire est disposée au-dessus et/ou à l'arrière de la partie attachée.

7. Dispositif de pare-brise selon l'une quelconque des revendications 1 à 6, dans lequel le pare-brise (2) est attaché au support d'écran pour pouvoir être réglable en positions haute et basse.

8. Dispositif de pare-brise selon la revendication 7, dans lequel les une paire de montants (31, 32) sont couplés l'un à l'autre aux extrémités inférieures par un élément de couplage.

9. Dispositif de pare-brise selon l'une quelconque des revendications 1 à 8, dans lequel le pare-brise est attaché au support d'écran pour pouvoir être réglé en positions haute et basse et le support d'écran est attaché à une potence par des éléments de fixation qui sont différents des éléments de fixation fixant le pare-brise.

10. Dispositif de pare-brise selon l'une quelconque des revendications 1 à 9, dans lequel la partie de montage d'accessoire est fixée à une surface d'attache de partie de montage d'accessoire par des éléments de fixation dans le sens de la largeur du véhicule, qui sont différents des éléments de fixation fixant le pare-brise et le support d'écran.

11. Dispositif de pare-brise selon la revendication 6, dans lequel les parties attachées sont disposées respectivement aux extrémités dans le sens de la largeur du véhicule de la partie de montage d'accessoire qui a une forme en coupe colonnaire et une forme en U dans son ensemble.

12. Dispositif de pare-brise selon la revendication 10, dans lequel la partie de montage d'accessoire est pourvue pour raccorder une paire de montants et la partie attachée sont placées aux extrémités dans le sens de la largeur du véhicule de la partie de montage d'accessoire.
